# EUROPEAN PATENT SPECIFICATION

(11) **EP 3 720 682 B1**
(45) Date of publication and mention of the grant of the patent: **29.05.2024**
(21) Application number: 18706578.4
(22) Date of filing: 07.02.2018
(51) Int. Cl.: B29C 45/18, B29C 45/76, B29C 48/92, B29C 48/03, B29C 48/29, B29K 67/00, B29K 105/26

(54) **PET PROCESSING METHOD**
PET-VERARBEITUNGSVERFAHREN
PROCÉDÉ DE TRAITEMENT DE PET

(30) Priority: 08.12.2017 LT 2017540
(43) Date of publication of application: 14.10.2020
(73) Proprietor: Craig, Douglas, Howth (IE); McKeown, Dave, Celbridge (IE)
(72) Inventor: Craig, Douglas, Howth (IE); McKeown, Dave, Celbridge (IE)
(74) Representative: Petniunaite, Jurga
(86) International application number: PCT/IB2018/050751
(87) International publication number: WO 2019/111061

(56) References cited:
- EP-A1- 1 470 175
- EP-A1- 2 406 056
- EP-A1- 2 671 912
- WO-A1-2016/123330
- CN-A- 101 463 183
- CN-A- 105 773 946
- US-A1- 2003 146 531
- US-A1- 2004 262 813
- US-A1- 2014 234 608
- US-A1- 2017 152 611
- Srbertzy: "5-Aug-06 JONCRYL ADR-4380 Page 1 Key Features & Benefits", , 15 August 2006 (2006-08-15), pages 1-9, XP055497476, Retrieved from the Internet: URL:http://www2.basf.us/additives/pdfs/438 5_TDS.pdf [retrieved on 2018-08-06]

## Description

### FIELD OF THE INVENTION

The invention relates to a method for processing thermoplastic resin and in particular method for processing thermoplastic resin using machine learning.

### TECHNICAL FIELD

PET (Polyethylene Terephthalate) is now the industry material of choice for packaged high volume consumer products. Processors of PET experience property variations between suppliers' batches of virgin raw material. No solution exists to address quality variations in virgin PET raw materials. No liquid composition formula exists to facilitate the addition of PET re-cyclate (post-consumer / R-PET) into virgin raw material production stream.

Just as PET enclosures have mostly replaced glass bottles, similarly, spun PET fiber, produced by conventional methods using conventional machinery has largely replaced cotton in the insulation and fabric industry applications (clothing, upholstery, carpets, nappies).

PET extrusion conventional methods using conventional machinery is common methodology employed in all forms of food packaging (trays, containers).

PET injection molding conventional methods using conventional machinery is primarily used for making hallow mini-containers (pre-forms) which later are blow molded by heat/pressure to make bottles (for drinking liquids).

Due to raw material variations, PET processors experience between 4-6% non-conforming products (scrap). The accepted industry real cost calculation is generally 5 times the cost of this rejected processed material. Dry additive manufactures supply to compounders who typically only supply large batch quantities of virgin polymer (minimum 25 tons lots).

Up until now, only additives (such as "Repi^{™}", "Color Matrix^{™}") in the PET raw material processing process where property tuning additives for influencing such properties as color and clarity of processed material. But none of known additives where suitable for reducing or eliminating raw material variation in PET raw material processing.

Liquid additives are limited to changing certain properties of material and are used as colorants, UV stabilizers, anti-static additives, optical brighteners, temperature tolerance additives (to prevent damage in later processes), gas controllers e.g. oxygen scavengers, CO2 barriers, acetaldehyde scavengers etc. (to increase shelf life of finished products, preserve the taste and appearance of packaged products etc.). Theses additives are mostly aesthetic enhancers, but are not suitable for R-PET valorization, scrap reduction, reactive/closed loop.

Non-reactive processing systems have no means of rescuing a faulty of unevenly-mixed dry polymer blend once it is being put through molding, spinning, or extrusion equipment.

Just 2% of plastics are used in closed-loop recycling, where it is reintroduced to the value chain multiple times. This is just 1.6 million tones out of 78 million tones annual demand in Europe. In comparison, about 72% of four plastic demand goes completely unrecoverable.

Industry codes and pending legislation throughout Europe are focusing on packaging products made from PET. This is driving a more proactive approach to recycling and reducing carbon footprint in PET Processing Facilities.

US patent application publication No. US 2014/234608 A1 discloses a method for producing colored molded bodies based on the following steps: (a) plasticising a polymeric material and blending the material with one or more dyes to form a molding compound by means of a gelation unit equipped with a metering apparatus for dyes; (b) optionally temporarily storing the molding compound obtained in step (a); (c) charging a molding device with the molding compound; and (d) producing the molded body; wherein the ratio of dye to polymeric material is automatically regulated using a colorimeter and an electronic control, and in step (a) color values are measured at the molding compound located in the gelation unit and transmitted as a signal to the electronic control.

CN patent application publication No. CN 105 773 943 A discloses a preparation method of a railway sleeper. The preparation method of the railway sleeper comprises the following steps: (1) evenly mixing materials in mixing equipment at high speed, placing the mixture in a spring feeder, mounting reinforcing ribs from the tail of a forming mold of forming equipment, and enabling free ends of the reinforcing ribs to exceed the position of a material inlet of the forming mold; (2) starting the spring feeder and a forced feeder, pressing the materials in the step 1 in a planetary screw extrusion system of the forming equipment and fully plasticizing the materials; (3) fully discharging gas of the materials which are fully plasticized in the step 2 at the position of a connecting device at the tail end of the planetary screw extrusion system, then guiding the materials in a single-screw extrusion system of the forming equipment, further plasticizing and melting and establishing stable extrusion pressure; and (4) feeding melt on which pressure is built up in the step 3 in the forming mold from a side rear end of the forming mold under the effect of the pressure, driving the reinforcing ribs to be conveyed forwards by using the molten materials, and shaping in the forming mold to form the large-cross-section reinforced railway sleeper.

European patent application publication No. EP 2 406 056 discloses a process for manufacturing a powder coating comprising the steps of: preparing a powder coating premix comprising a resin and optionally a crosslinker therefor; feeding the premix through a melt extruder, wherein the melt extruder conditions comprise a temperature of from 100° to 200°C and a pressure of from 1 to 16 bar; cooling the extruded material; and comminuting it to fine particles, said process being characterized in that from 1 to 25 wt. % (based on the weight of said premix) of a suspension or dispersion of a particulate material in water is added to the melt extruder, said water being immiscible with at least the resin of the powder coating premix and said water being maintained within the melt extruder as a superheated, pressurized liquid which evaporates from the premix only as it exits the extruder, the particulate material of the suspension or dispersion being retained within the extruded material.

European patent application publication No. EP 2 671 912 A1 discloses method of stabilizing ester groups-containing polymer, comprising adding substituted carbodiimide compounds (I) in liquid form and in continuous or discontinuous processes, during preparation and/or processing of the polymer. Stabilizing ester groups-containing polymer, comprises adding substituted carbodiimide compounds of formula (I) in liquid form and in continuous or discontinuous processes, during preparation and/or processing of the polymer. R1, R2, R4, R6 : 3-6C alkyl; and R3, R5 : 1-3C alkyl.

International patent application publication No. WO 2016/123330 A1 is considered to be the closest prior art. The document discloses a method of processing of PET raw material or recycled PET material comprising drying and processing plastic in a conventional plastic processing machine comprising a plasticizing cylinder for molten thermoplastic resin and administration of additives.

All of the above mentioned prior art methods lack tuning and managing steps of processing of PET material resulting in production of relatively large amounts of PET scrap material.

The invention addresses the mentioned problems by overcoming said shortcomings and shows further advantages.

### SUMMARY OF THE INVENTION

The invention as set out in the appended set of claims addresses the above problems by tuning PET raw material processing process by employing real time process management and machine learning steps and reactive addition of dosing of homogenizing composition for impregnating chain extenders and compatibilizing agents in thermoplastic resin using the liquid additive as a carrier into the process for modifying material performance. The properties of PET blend are no longer fixed once dryblending and melting is complete.

In particular the invention allows (with respect to fiber spinning, extruding and inject blow molding) reduce scrap loss rate, rework, improve production yields, reduce cycle times, reduce pollution, reduce carbon footprint, reduce energy consumption, stabilize processing, reduce downtime, improve R-PET behavior in processing, increase overall R-PET utility.

The invention allows reduction of component scrap levels by at least 75% i.e. 4% scrap reduced to 1%, increase PET extrusion, PET injection molding, PET fiber spinning lines productivity.

### BRIEF DESCRIPTION OF DRAWINGS

Features and advantages of the invention are described in detail with reference to the drawing:

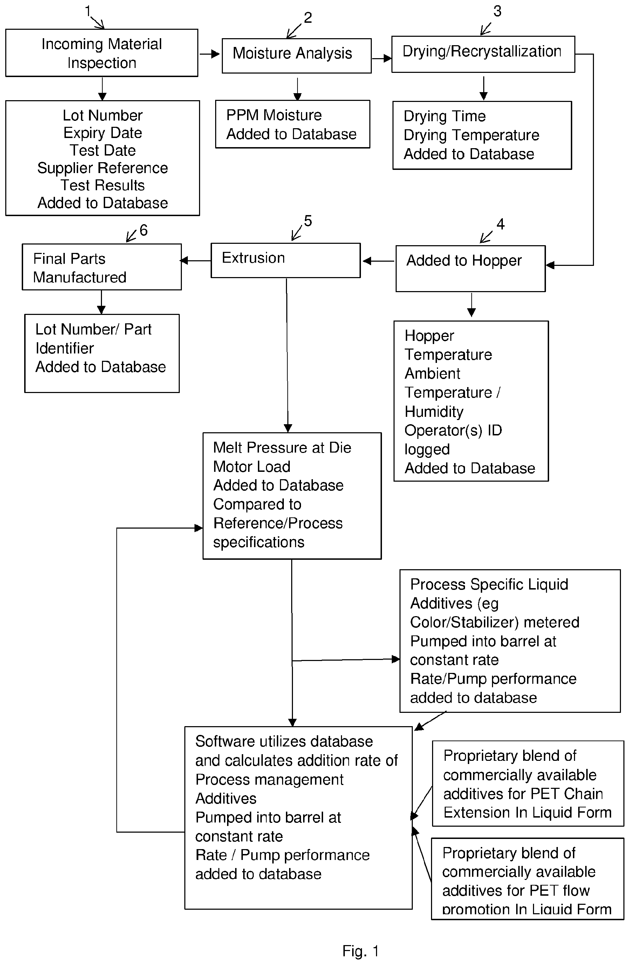

Fig. 1 shows a detailed flow of method steps according to the invention.

### DETAILED DESCRIPTION OF THE INVENTION

A system for processing PET raw material or recycled PET material is disclosed but is not part of the present invention. The system comprises any conventional plastic processing machinery, such as plastic spinning or molding, or extrusion machinery for PET spinning, molding or extrusion. It further comprises mechanical-hydraulic system for the on-line administration of liquid plastic additives. The additives improve behavior of PET in-process, particularly recycled PET (R-PET). The system automatically and intelligently modulates additive mixing ratios in plastic batches. The injection system comprises a carousel injection system for adding a range of property enhancers or property altering additives to a blend while it's being melted, molded or extruded. The system comprises a dynamic PID system comprising a programmable logic controller (PLC) and system of plurality of sensors. The sensors collects input from three key positions in any plastic processing machine - the material hopper, the screw, and the dispensing throat. Guided by PLC, which calculates chemical additive output based on its programming, appropriate liquid additive is then selected from a carousel and dispensed through a pump and manifold, injecting the additive into the liquid PET. Tangible systems are tied together with cloud connectivity. Data is access is available through internet connection. Allows remote monitoring and emergency response and a more holistic understanding of the system.

The PLC integrates sensors and control switches for system-critical hardware as well as the central processing and process safety hardware. The system comprises and integrated human-machine interface hardware.

A liquid composition for use in the system as described above and its manufacturing method is disclosed. In particular liquid polymer additives and method of converting "dry" polymer additive compounds into "liquid" format is disclosed. The additive chemicals are based on oligomeric multifunctional materials dispersed in a liquid carrier.

According to the invention a method for processing raw PET material or recycled PET material is disclosed. The method comprises steps:
- Obtaining (1) materials for processing, including: polymer resin in particular form, liquid additives (according to the invention), other additives such as fillers, whiteners etc.
- Adding the following data to database of system main monitoring and control unit:
   o Lot number of incoming materials, supplier reference, date of receipt of materials, (for traceability)
- Assigning a date of expiry to the materials based on customer and supplier guidelines and validated processes - this will automatically stop the production line from utilising materials outside of the approved window.
- Adding test results carried out on the used resins.
- Subjecting (2) the resin to a moisture test and calculating parts per million (PPM) of moisture of the resin batch. This data is added to the database. According to the added data, the processing unit of the monitoring and control unit then calculates the appropriate drying conditions for the resin so as to avoid under or over drying the material - both of which would lead to substandard resin entering the process.
- Adding (3) polymer resin to a dryer and drying at a correct temperature and time as specified by the calculations of the processing unit from previous step. If the dryer and feed system is of sufficiently modern design, the monitoring and control unit will control the dryer to a pre-set the temperature and time to reduce operator error.
- Conveying (4) the material to a hopper of a plastic processing machine. Online sensors measure the actual ppm moisture entering the machine. This information is relayed to the monitoring and control unit and causes two pieces of instant feedback:
   ∘ The monitoring and control unit compares the actual moisture ppm to the expected ppm and alerts operators if there is a significant deviation (as this may be due to a dryer fault etc.).
   ∘ Utilises the % moisture to help identify the expected viscosity of the resin based on data added during the validation of the system.
- Logging the IDs of operators running the line for traceability.
- Logging ambient conditions such as temperature and humidity in the area by a local sensor to take into account environmental variations during processing.
- Processing (5) the polymer by following steps:
   ∘ As the polymer resins travel through a barrel of the machine conveyed by a screw, they begin to melt. They exert a force (pressure) at a die and exhibit a load on the motor in order to be moved through the machine. Both of these measurements are functions of the viscosity of the material. Readings of these measurements is taken every second by the monitoring and control unit. Both of the measurements are indicative of material performance (namely molecular weight).
   ∘ Client specific additives are metered into the extruder (these may be colour additives, stabilisers etc.). These are added to the barrel at a constant rate in either liquid or pellet form. Their addition rate and the actual performance of their feeders are added to the database. Fluctuations in feeder performance may lead to the algorithm calculation making an error thus the real-time performance of the ancillaries I taken into account.
   ∘ The addition rate of the additive according to the invention is calculated using proprietary software utilising real-time information: moisture (from hopper sensor), motor load, die pressure (from main machine), environmental conditions, drying time (from local sensor and dryer) and feeder performance / material type (from any additional ancillaries). This allows the software to 'choose' on a second by second basis whether the process resin needs to be managed and if management needs to occur, does the resin need to have an increase in a molecular weight / viscosity / chain scission repair or a decrease in molecular weight / viscosity/ increase in flow promotion. The software then controls the delivery device to meter the correct amount of appropriate process additive in real-time directly into the barrel. One kind of liquid additive according to the invention is a unique blend of PET chain extenders and commercially available materials that are traditionally added in master batch form. Adding them in real-time and allowing the monitoring and control unit to control the rate of addition on a second to second basis allows to increase the branching and chain length of PET when required by the process. Another kind of liquid additive according to the invention is a unique blend of PET flow promoter and commercially available materials that are traditionally added in master batch form. Adding them in real-time and allowing the monitoring and control unit to control the rate of addition on a second to second basis allows to only increase the flow of PET when required by the process. The additives reacts with the PET in real-time and exits the machine. The monitoring and control unit continues to monitor the process and alter the parameters and feed rates as necessary in real-time to maintain and improve process stability.
- Adding (6) the produced materials lot number is added to the database for traceability. The monitoring and control unit calculations and database is constantly uploaded to the cloud for remote viewing by the management team. Any interactions that are observed to deviate from expected norms are added to the algorithm to prevent deviations from recurring (machine learning in real-time).

The modulation of polymer being processed is based on known inputs and measured outputs at key stages in the plastic processing system - the dry raw material hopper, the extrusion/molding screw and the dispensing throat. The system is reactive and adaptable, responding to live data collected from machinery on the manufacturing line. This allows to respond to any aberrant behavior from the raw materials or dry blend. Continuous monitoring comprises automated sensor reading, automatic process capability and process capability indexing monitoring.

Software monitors and processes inputs from the sensors and manages the outputs of the carousel and injection systems. It dynamically responds to the amount of additive needed (proportional control), adjusting the injection rate and amounts as properties approach ideal behavior (differential control), and predicting behavior based on these inputs to avoid overcompensating and necessitating more additive (integral control).

The liquid additives are used to dynamically dose a shot of PET or R-PET based on data from relevant sensors. The dosing unit then delivers a specific small volume of these process modifiers based on sensor inputs, as calculated by the software. The chemicals then control the behavior of the plastic through heat-activated crosslinking or chain extension of the polymeric material during the melt processing step.

Adequate distribution of denial of service (DDoS) protection is present.

The process monitoring system collects key data for mixing ratios, temperature, injection screw force, material viscosity and other critical inputs. Based on the collected data the control system calculates the additive amounts needed based on desired results and where the inputs stand relative to these known values. From there it relies on fundamental control system principles of PID process control (proportional-integral-differential). This ensures close adherence to the desired outcomes, ensuring predictable system and output material behavior.

By improving thermal resistance in the blend prevents liquid shot from accidentally reaching degradation temperature due to unnecessarily high viscosity keeping the same section of the material in contact with heating coils for too long.

It is to be understood that the liquid agent introduction system according to the invention may be used in conjunction with polymer processing systems such as continuous and discontinuous systems and in particular blow molding, injection molding and melt spinning systems.

Although numerous characteristics and advantages together with structural details and features have been listed in the present description of invention, the description is provided as an example fulfilment of the invention.

## Claims

1. A method of processing of PET raw material or recycled PET material comprising drying and processing plastic in a conventional plastic processing machine comprising a plasticizing cylinder for molten thermoplastic resin and administration of additives wherein branching and chain length of PET is controlled in liquid PET using blend of liquid PET chain extenders being dosed in real-time based on real-time readings of sensors at the material hopper, the screw, and the dispensing throat of the plastic processing machine and ambient conditions sensors, and injected into liquid PET wherein the liquid PET chain extenders are PET homogenizing additives, wherein sensor at the hopper is reading actual ppm moisture entering the machine, sensor at the screw is reading viscosity of liquid PET and motor load, sensor at the dispensing throat is reading pressure.

2. Method according to claim 1, wherein the sensors are relaying information to a monitoring and control unit which compares the actual moisture ppm to the expected ppm and identifies expected viscosity of the liquid PET.

3. Method according to any one of the preceding claims wherein the ambient conditions are temperature and humidity of the surrounding of the plastic processing machine.

4. Method according to any one of the preceding claims, wherein the liquid PET is managed on second by second basis wherein the managing liquid PET comprises increasing or decreasing molecular weight and viscosity, repair or chain scission, increasing flow promotion.

5. Method according to any one of the preceding claims, wherein filling amount of the molten resin in the plasticizing cylinder is measured and liquid additive into the molten resin is introduced in the plasticizing cylinder while moving back the screw by a predetermined distance without rotating the screw from a position of the screw at the time of completing the measuring of filling amount of the molten resin, pressure of the molten resin is detected, and injection start position for the screw and the addition rate of the liquid additive is determined based on the pressure.

6. Method according to claim 5, wherein determining of the injection start position for the screw includes pressurizing the molten resin by advancing the screw; determining of the injection start position for the screw further includes depressurizing the molten resin after the pressurizing of the molten resin; injection start position for the screw is different from the position of the screw at the time of completing the measuring; and the liquid additive is introduced into a flow-front portion of the molten resin in the plasticizing cylinder.

## Patentansprüche

1. Verfahren zum Verarbeiten von PET-Rohmaterial oder recyceltem PET-Material, umfassend Trocknen und Verarbeiten von Kunststoff in einer herkömmlichen Kunststoffverarbeitungsmaschine, die einen Plastifizierungszylinder für geschmolzenes thermoplastisches Harz umfasst, und Verabreichung von Zusatzstoffen, wobei Verzweigung und Kettenlänge von PET in flüssigem PET unter Verwendung einer Mischung aus flüssigen PET-Kettenverlängerungsmitteln gesteuert wird, die in Echtzeit auf Grundlage von Echtzeitablesungen von Sensoren an dem Materialtrichter, der Schnecke und der Spenderöffnung der Kunststoffverarbeitungsmaschine und Umgebungszustandssensoren dosiert werden und in flüssiges PET eingespritzt werden, wobei die flüssigen PET-Kettenverlängerungsmittel PET-homogenisierende Zusatzstoffe sind, wobei der Sensor an dem Trichter einen ppm-Istwert für die Feuchtigkeit misst, die in die Maschine eindringt, der Sensor an der Schnecke die Viskosität von flüssigem PET und die Motorlast misst und der Sensor an der Spenderöffnung den Druck misst.

2. Verfahren nach Anspruch 1, wobei die Sensoren Informationen an eine Überwachungs- und Steuereinheit weitergeben, welche den ppm-Istwert für die Feuchtigkeit mit dem ppm-Erwartungswert vergleicht und die erwartete Viskosität des flüssigen PET identifiziert.

3. Verfahren nach einem der vorhergehenden Ansprüche, wobei die Umgebungsbedingungen Temperatur und Feuchtigkeit der Umgebung der Kunststoffverarbeitungsmaschine sind.

4. Verfahren nach einem der vorhergehenden Ansprüche, wobei das flüssige PET im Sekundentakt gehandhabt wird, wobei das Handhaben des flüssigen PET Erhöhen oder Verringern von Molekulargewicht und Viskosität, Reparatur oder Kettenspaltung und Erhöhen der Strömungsförderung umfasst.

5. Verfahren nach einem der vorhergehenden Ansprüche, wobei die Füllmenge des geschmolzenen Harzes in dem Plastifizierungszylinder gemessen wird und flüssiger Zusatzstoff in das geschmolzene Harz in den Plastifizierungszylinder eingeführt wird, während die Schnecke um einen vorbestimmten Abstand zurückbewegt wird, ohne die Schnecke aus einer Position der Schnecke zum Zeitpunkt des Abschlusses des Messens der Füllmenge des geschmolzenen Harzes zu drehen, der Druck des geschmolzenen Harzes erfasst wird und die Einspritzstartposition für die Schnecke und die Zugaberate des flüssigen Zusatzstoffs auf Grundlage des Drucks bestimmt werden.

6. Verfahren nach Anspruch 5, wobei das Bestimmen der Einspritzstartposition für die Schnecke Verdichten des geschmolzenen Harzes durch Vorschieben der Schnecke beinhaltet; das Bestimmen der Einspritzstartposition für die Schnecke ferner Entspannen des geschmolzenen Harzes nach dem Verdichten des geschmolzenen Harzes beinhaltet; die Einspritzstartposition für die Schnecke sich von der Position der Schnecke zum Zeitpunkt des Abschlusses des Messens unterscheidet; und der flüssige Zusatzstoff in einen Fließfrontabschnitt des geschmolzenen Harzes in dem Plastifizierungszylinder eingeführt wird.

## Revendications

1. Procédé de traitement de matières premières de PET ou de matières recyclées de PET comprenant le séchage et le traitement de plastique dans une machine de plasturgie conventionnelle comprenant un cylindre de plastification pour la résine thermoplastique fondue et l'administration d'additifs dans lequel la ramification et la longueur de chaîne du PET sont régulées dans le PET liquide à l'aide d'un mélange d'allongeurs de chaîne de PET liquide dosés en temps réel sur la base de lectures en temps réel de capteurs au niveau de la trémie de matériau, de la vis et de la bouche de distribution de la machine de plasturgie et des capteurs des conditions ambiantes, et injectés dans le PET liquide dans lequel les allongeurs de chaîne de PET liquide sont des additifs d'homogénéisation de PET, dans lequel le capteur de la trémie lit les ppm réels d'humidité entrant dans la machine, le capteur de la vis lit la viscosité du PET liquide et la charge du moteur, et le capteur de la bouche de distribution lit la pression.

2. Procédé selon la revendication 1, dans lequel les capteurs transmettent des informations à une unité de surveillance et de commande qui compare le ppm d'humidité réel au ppm attendu et identifie la viscosité attendue du PET liquide.

3. Procédé selon l'une quelconque des revendications précédentes, dans lequel les conditions ambiantes sont la température et l'humidité de l'environnement de la machine de plasturgie.

4. Procédé selon l'une quelconque des revendications précédentes, dans lequel le PET liquide est géré seconde par seconde, dans lequel la gestion du PET liquide comprend une augmentation ou une diminution du poids moléculaire et de la viscosité, une réparation ou une scission de chaîne, une augmentation de l'écoulement.

5. Procédé selon l'une quelconque des revendications précédentes, dans lequel la quantité de remplissage de résine fondue dans le cylindre de plastification est mesurée et un additif liquide dans la résine fondue est introduit dans le cylindre de plastification tout en reculant la vis d'une distance prédéterminée sans faire tourner la vis à partir d'une position de la vis au moment de l'achèvement de la mesure de la quantité de remplissage de la résine fondue, la pression de la résine fondue est détectée, et la position de début d'injection pour la vis et le taux d'ajout de l'additif liquide sont déterminés sur la base de la pression.

6. Procédé selon la revendication 5, dans lequel la détermination de la position de début d'injection pour la vis comporte la pressurisation de la résine fondue en faisant avancer la vis ; la détermination de la position de début d'injection pour la vis comporte également la dépressurisation de la résine fondue après la pressurisation de la résine fondue ; la position de début d'injection pour la vis est différente de la position de la vis au moment de la réalisation de la mesure ; et l'additif liquide est introduit dans une partie avant d'écoulement de la résine fondue dans le cylindre de plastification.
